# EUROPÄISCHE PATENTSCHRIFT

(11) **EP 2 563 660 B1**
(45) Veröffentlichungstag und Bekanntmachung des Hinweises auf die Patenterteilung: **28.06.2017**
(21) Anmeldenummer: 11717488.8
(22) Anmeldetag: 19.04.2011
(51) Int. Cl.: B64D 11/00, B64D 13/00

(54) **TRÄGERSTRUKTUR ZUM EINSATZ IN EINER LUFTZUFUHRANORDNUNG SOWIE VERSORGUNGSSYSTEM MIT EINER SOLCHEN TRÄGERSTRUKTUR UND VERFAHREN ZUR KONFIGURATION EINES SOLCHEN VERSORGUNGSSYSTEMS**
SUPPORT STRUCTURE FOR USE IN AN AIR SUPPLY ARRANGEMENT AND SERVICE SUPPLY SYSTEM COMPRISING SAID TYPE OF SUPPORT STRUCTURE AND METHOD FOR THE CONFIGURATION
STRUCTURE DE SUPPORT À UTILISER DANS UN SYSTÈME D'AMENÉE D'AIR, SYSTÈME D'ALIMENTATION POURVU D'UNE TELLE STRUCTURE DE SUPPORT, ET PROCÉDÉ DE CONFIGURATION ASSOCIÉ

(30) Priorität: 28.04.2010 US 328717 P; 28.04.2010 DE 102010018569
(43) Veröffentlichungstag der Anmeldung: 06.03.2013
(73) Patentinhaber: Airbus Operations GmbH, 21129 Hamburg (DE)
(72) Erfinder: UMLAUFT, Sebastian, 22767 Hamburg (DE); KOBLITZ, Ralf, 21129 Hamburg (DE)
(74) Vertreter: Schicker, Silvia
(86) Internationale Anmeldenummer: PCT/EP2011/001987
(87) Internationale Veröffentlichungsnummer: WO 2011/134615

(56) Entgegenhaltungen:
- WO-A2-2010/122017
- WO-A2-2011/051148
- DE-A1-102005 031 875
- DE-A1-102006 061 455
- DE-B3-102007 014 406
- DE-C1- 19 502 658
- US-A- 3 330 506
- US-A- 3 370 813

## Beschreibung

Die vorliegende Erfindung betrifft eine Trägerstruktur zum Einsatz in einer Luftzufuhranordnung für die Klimatisierung von Passagierkabinen in Flugzeugen, wobei die Luftzufuhranordnung wenigstens eine zentral geregelte Kabinenbelüftung sowie eine individuell einstellbare Kabinenbelüftung umfasst.

Die zentral, beispielsweise über das Cockpit, geregelte Kabinenbelüftung dient vor allen Dingen der aufgrund der großen Passagierdichte in einer Flugzeugkabine notwendigen fortwährenden Frischluftzufuhr. In der Praxis sind entsprechende Luftauslassöffnungen der zentral geregelten Kabinenbelüftung im Bereich der oberhalb der Sitzreihen angebrachten Gepäckstaufächer oder im Fußraum der Flugzeugpassagierkabine angeordnet.

Daneben verfügen Verkehrsflugzeuge regelmäßig über eine zusätzliche, individuell einstellbare Kabinenbelüftung für jeden einzelnen Sitzplatz innerhalb der Passagierkabine, die mit einstellbaren Luftdüsen, sogenannten "Luftduschen", verbunden ist. Diese Luftduschen sind oberhalb der Passagiersitze angebracht und können von jedem Passagier bezüglich des Luftstroms und der Strömungsrichtung individuell eingestellt werden. Damit jeder Passagier die seinem Sitz zugeordnete Luftdusche bequem erreichen kann, muss diese relativ zu seinem Sitz in einer vorbestimmten Position angeordnet sein.

Daraus ergibt sich, dass die Anordnung der Luftduschen in Längsrichtung der Passagierkabine individuell für jedes Layout einer Passagierkabine bezüglich der Sitzposition erfolgen muss. Da die Luftduschen der individuell einstellbaren Kabinenbelüftung exakt an einer definierten Stelle über den jeweiligen Sitzen bzw. Sitzreihen der Passagierkabine zu platzieren sind, stellt auch die Verrohrung zum Flugzeugklimasystem ein erhebliches Installationserschwernis in der Kabinenkonfiguration dar. Neben der genauen Position müssen auch Spaltmaße zu der Innenverkleidung der Passagierkabine überprüft und eingestellt werden. Daraus resultiert ein in der Regel zeit- und kostenaufwendiger Definition-, Verwaltungs- und Installationsaufwand.

Im Betrieb moderner Verkehrsflugzeuge gewinnen zudem Bestrebungen, die Flugzeuge möglichst optimal auszulasten, immer mehr an Bedeutung. Eine Optimierung der Flugzeugauslastung ist häufig jedoch nur dann möglich, wenn die Flugzeugpassagierkabine zumindest in gewissem Umfang flexibel umrüstbar ist, d.h. eine möglichst flexible Anpassung der Abstände zwischen den hintereinander in der Flugzeugpassagierkabine angeordneten Sitzreihen möglich ist (Rekonfiguration).

So kann es aus Sicht einer Fluggesellschaft ökonomisch sinnvoll sein, ein Verkehrsflugzeug in bestimmten Zeiten mit einem höheren Flugaufkommen, z.B. während der Urlaubszeit, mit einer höheren Anzahl von Sitzen bzw. Sitzreihen zu betreiben, die in geringerem Abstand in Längsrichtung der Kabine zueinander angeordnet sind. In anderen Fällen kann es sinnvoller sein, die Passagierkabine mit weniger Sitzen bzw. Sitzreihen auszustatten, welche in einem größeren Abstand in Längsrichtung der Flugzeugkabine zueinander angeordnet sind. Gegebenenfalls wird bei einer solchen Rekonfiguration nicht nur der Abstand der Sitzreihen zueinander verändert, sondern es werden auch andere Arten von Sitzen bereitgestellt und je nach Klasse (Economy, Business oder First Class) werden zudem weitere Bedien- und Komfortelemente für die Flugpassagiere bereitgestellt oder nicht.

In jedem Fall muss die individuell einstellbare Kabinenbelüftung ebenfalls entsprechend an das veränderte Kabinenlayout angepasst werden, damit bei einer Veränderung der Abstände zwischen den in Längsrichtung der Flugzeugkabine angeordneten Sitzen bzw. Sitzreihen auch die den Sitzen zugeordneten Luftduschen in ihrer Position relativ zu den Sitzen korrekt angeordnet sind. Eine solche Rekonfiguration bringt nahezu denselben Aufwand mit sich, wie eine Ersatzkonfiguration der Passagierkabine. Insbesondere sicherheitsrelevante Layoutmodifikationen müssen vor der Wiederinbetriebnahme des Flugzeugs nach der Kabinenrekonfiguration aufwendigen Tests unterzogen werden. Schließlich ist, je nach Umfang der durchgeführten Rekonfigurationsmaßnahmen, eine behördliche, zumindest aber eine herstellerseitige Zertifizierung der modifizierten Passagierkabinenkonfiguration nötig. Die Umrüstung einer herstellerseitig festgelegten Passagierkabinenkonfiguration eines Verkehrsflugzeugs ist folglich sehr zeitaufwendig und kostenintensiv.

Aus der DE 10 2007 019 539 A1 ist eine Luftzufuhrvorrichtung für die Klimatisierung von Passagierräumen in Flugzeugen bekannt, bei der Bauelemente der zentral geregelten Kabinenbelüftung sowie der individuell einstellbaren Kabinenbelüftung zu einer eigenständig handhabbaren Baugruppe verbunden sind. Auf diese Weise wird eine kompakte Luftzufuhrvorrichtung bereitgestellt, die grundsätzlich einfacher zu montieren ist, als zwei separat Luftzuführungssysteme. Jedoch ist auch bei diesen eigenständig handhabbaren Baugruppen darauf zu achten, dass diese in einer exakten Position relativ zu den entsprechenden Sitzreihen angeordnet werden. Weiterhin stellen sich gleichfalls die Probleme eines erheblichen Zeit- wie auch Kostenaufwands bei einer gewünschten Rekonfiguration, da die Bauelemente der individuell einstellbaren Kabinenbelüftung nicht geeignet sind, in ihrer Position angepasst zu werden.

Weiterhin sind Lösungen aus dem Stand der Technik bekannt, die grundsätzlich eine Anpassung der Luftduschen bei einer Rekonfiguration des Sitzlayouts ermöglichen. So ist aus der DE 10 2007 014 406 B3 ein Versorgungskanal mit einem Luftverteilungssystem bekannt, der ein längliches Gehäuse mit einem sich in Längsrichtung des Gehäuses erstreckenden Hohlprofil und Luftduschenschienen aufweist. Eine Manteloberfläche des Hohlprofils weist eine Vielzahl von Perforationsöffnungen auf, an denen die Luftduschenschienen mit ihrem Lufteinlass dicht anliegen, so dass Luft durch die Perforationsöffnungen aus dem Versorgungskanal in die Luftduschenschienen einströmen kann. Diejenigen Perforationsöffnungen, die nicht in einen Lufteinlass einer Luftduschenschiene münden, können durch eine aufgeklebte Klebefolie abgedichtet werden.

Das Aufkleben einer solchen Klebefolie ist jedoch mühsam und zeit- sowie kostenintensiv. Weiterhin ist es notwendig, bei jeder Rekonfiguration des Passagierraums die angebrachten Klebefolienabschnitte abzuziehen sowie nach erfolgter Neupositionierung der Luftduschenschienen neue Klebefolien in entsprechender Länge an die geänderten Abstände zwischen den Luftduschenschienen anzupassen und auf die Perforationsöffnungen des Hohlprofils aufzukleben.

Das Dokument DE 43 03 681 C1 zeigt eine Luftleitung und eine damit verbundene Luftdusche, die relativ zu der Luftleitung entlang dieser verschiebbar ist. Die Luftleitung besteht hierbei aus einem geradlinigen formsteifen Hohlprofil mit einem Längsschlitz, wobei der Längsschlitz durch mindestens eine in Ruhelage in Folge einer Vorspannung geschlossene Dichtlippe abgedichtet ist. Zur Entnahme der Luft ist ein in Längsrichtung der Luftleitung geführter Schlitten mit einem in den Innenraum des Hohlprofils hineinragenden Entnahmestutzen vorgesehen, der mit der Luftdusche verbunden ist. Der Schlitten weist eine Außenführung und eine Innenführung auf, die mit dem Entnahmestutzen fest verbunden sind und so in einem gegenseitigen Abstand angeordnet sind, dass sie einen Zwischenraum bilden, der den Dichtlippen angepasst ist. Als schwierig hat sich bei einer solchen Ausführungsform jedoch die Integration in die Verkleidung des Passagierinnenraums erwiesen.

Zudem besteht bei beiden bekannten Anordnungen das Problem, dass die exakte Position der Luftduschen relativ zu den jeweiligen Sitzpositionen ermittelt werden muss, ehe diese angepasst werden können, was ein erhebliches Installationserschwernis darstellt.

Eine Aufgabe der vorliegenden Erfindung besteht folglich darin, eine einfache, kostengünstige und flexible Luftzufuhr zur Klimatisierung von Passagierkabinen in Flugzeugen bereitzustellen.

Diese Aufgabe wird durch eine Trägerstruktur zum Einsatz in einer Luftzufuhranordnung mit den Merkmalen des Anspruchs 1 sowie ein Versorgungssystem mit den Merkmalen des Anspruchs 5 und ein Verfahren zur Konfiguration eines entsprechenden Versorgungssystems mit den Merkmalen des Anspruchs 9 gelöst.

Aus den Dokumenten US 3,370,813 A, DE 10 2006 061 455 A1, US 3,330,506 A und DE 10 2007 014 406 B3 ist jeweils zumindest eine Trägerstruktur zum Einsatz in einer Luftzufuhranordnung für die Klimatisierung von Passagierkabinen in Flugzeugen bekannt, wobei die Luftzufuhranordnung wenigstens eine individuell einstellbare Kabinenbelüftung umfasst und die Trägerstruktur einen Abschnitt mit einer Vielzahl von Aufnahmen aufweist, wobei jede Aufnahme dazu ausgebildet ist, ein aktives Modul zur individuell einstellbaren Kabinenbelüftung aufzunehmen und lösbar zu befestigen, und die Anzahl der Aufnahmen so hoch ist, dass jeder in der Passagierkabine angeordneten Sitzreihe wenigstens eine Aufnahme zugeordnet ist.

Dokument DE 10 2005 031 875 A1 betrifft ein Dachmodul für ein Kraftfahrzeug, das zumindest einen Belüftungskanal aufweist, der derart an dem Dachmodul befestigt ist, dass ein luftführender Bereich begrenzt wird. Es offenbart eine Trägerstruktur, die zum Einsatz in einer Luftzufuhranordnung für die Klimatisierung von Passagierkabinen in Flugzeugen verwendet werden könnte, wobei die Luftzufuhranordnung wenigstens eine Kabinenbelüftung umfasst und die Trägerstruktur einen Abschnitt mit einer Vielzahl von Luftauslassöffnungen bzw. -düsen aufweist.

Dokument DE 195 02 658 C1 betrifft eine Anordnung zum Versorgen von Passagieren in einer Passagierkabine, insbesondere in einem Flugzeug, mit einer Versorgungseinheit, die Komfort- und Bedienelemente aufweist, wie Leseleuchte, Stewardruftaste, Lautsprecher, Luftdüse, Sauerstoffmaske und -generator und optische Anzeigeelemente sowie Zufuhrleitungen, die von einer Versorgungsleitung zur Versorgungseinheit abzweigen. Diese Versorgungsleitung enthält für alle in der Versorgungseinheit zusammengefassten Elemente die notwendigen Funktionsmittel in separaten Leitungen, wie beispielsweise eine Luftleitung für die Frischluftzufuhr der Luftdüsen und elektrische Energie- bzw. Signalübertragungsleitungen für die Leseleuchte oder die optischen Anzeigeelemente.

Die erfindungsgemäße Trägerstruktur weist die Merkmale des Anspruchs 1 auf: einen ersten Abschnitt zur Integration von Bauteilen der zentral geregelten Kabinenbelüftung, einen zweiten Abschnitt zur Aufnahme und/oder Integration von Bauteilen einer Notfallversorgung der Passagiere mit Sauerstoff und einen dritten Abschnitt mit einer Vielzahl von Aufnahmen, wobei jede Aufnahme dazu ausgebildet ist, ein aktives Modul zur individuell einstellbaren Kabinenbelüftung aufzunehmen und lösbar zu befestigen. Der dritte Abschnitt weist hierbei wenigstens so viele Aufnahmen auf, dass bei einer maximalen Belegung der Passagierkabine mit einer maximalen Anzahl von Sitzreihen, die in einem vorbestimmten minimalen Abstand angeordnet sind, jeder Sitzreihe wenigstens eine Aufnahme zugeordnet ist.
Der Begriff "Trägerstruktur" bezeichnet dabei eine sich in Längsrichtung der Flugzeugkabine erstreckende Struktur mit den vorstehend genannten drei Abschnitten, wobei sich diese als solche selbstverständlich aus mehreren miteinander verbindbaren Bauteilen zusammensetzen kann. So können beispielsweise mehrere Trägerstruktureinzelteile in Längsrichtung aneinander gesetzt werden und bilden in Verbindung die erfindungsgemäße Trägerstruktur.
Ein erster Abschnitt der Trägerstruktur dient zur Integration von Bauteilen der zentral geregelten Kabinenbelüftung, d.h. der erste Abschnitt bildet selbst Bauteile der zentral geregelten Kabinenbelüftung. Die Bauteile der zentral geregelten Kabinenbelüftung sind mit dem Flugzeugklimasystem verbunden, das für die Klimatisierung, d.h. die Lufttemperatur und Luftfeuchte, der zu verteilenden Luft verantwortlich ist.

Die Notfallversorgung der Passagiere mit Sauerstoff stellt in Luftfahrzeugen ein von der Luftzufuhranordnung für die Klimatisierung separates System dar. Dieses muss bereitgehalten werden, falls die zentrale Bedruckung der Kabine und/oder die Frischluftzufuhr in die Kabine ausfällt. So werden bei Großraumflugzeugen beispielsweise Sauerstoffversorgungseinheiten als quaderförmige Behälter vorgesehen. Diese sind meist oberhalb der Passagiersitze integriert und umfassen beispielsweise Sauerstoffmasken und eine Sauerstoffzuführung, mit der die Sauerstoffmasken verbunden sind.

In der Praxis stellt gerade die Integration der Sauerstoff-Notfallversorgung der Passagiere oftmals ein Problem dar, da hierfür nur ein geringer Bauraum zur Verfügung steht. In der vorliegenden Erfindung wird dieser im Bereich des zweiten Abschnitts der Trägerstruktur zu Verfügung gestellt. Der zweite Abschnitt kann, sofern er einen ausreichend großen Bauraum umfasst, selbstverständlich auch noch andere Komponenten aufnehmen und/oder integrieren, beispielsweise Bauteile eines Lautsprechersystems, einer Versorgung der Passagiere mit Licht oder Information und dergleichen sowie hierfür notwendige Strom- und Datenleitungen.

Der dritte Abschnitt weist schließlich eine Vielzahl von Aufnahmen auf, die beispielsweise in Längsrichtung der Passagierkabine nebeneinander angeordnet sind. Dabei ist jede Aufnahme dazu ausgebildet, ein aktives Modul zu individuell einstellbaren Kabinenbelüftung aufzunehmen und lösbar zu befestigen. Hierbei kann ein aktives Modul zur individuell einstellbaren Kabinenbelüftung mehrere Luftduschen aufweisen, wobei die Anzahl der Luftduschen der Anzahl der zu versorgenden Sitze der zugeordneten Sitzreihe entspricht.

Der dritte Abschnitt der Trägerstruktur ist hierbei auf eine maximale Belegung der Passagierkabine ausgelegt, bei der die Sitzreihen in einem vorbestimmten minimalen Abstand zueinander angeordnet sind, so dass sich eine maximale Anzahl von Sitzreihen innerhalb der Passagierkabine anordnen lässt. Der vorbestimmte minimale Abstand kann beispielsweise auf gesetzlichen oder behördlichen Bestimmungen beruhen, die vorgeben, wie groß der Mindestabstand der Sitzreihen in dem Flugzeug sein muss. Auf diese Weise ist sichergestellt, dass eine Konfiguration der Passagierkabine eine maximale Belegung des Verkehrsflugzeugs mit Passagieren ermöglicht, wobei bei einer Rekonfiguration des Kabinenlayout selbstverständlich auch eine Belegung mit weniger Sitzreihen möglich ist.

Die lösbare Befestigung eines aktiven Moduls in einer Aufnahme stellt dabei sicher, dass dieses bei einer Rekonfiguration auch wieder aus der jeweiligen Aufnahme entnommen werden kann. Der Begriff "aktives Modul" bezieht sich hierbei nur darauf, dass ein solches Modul Teil der individuell einstellbaren Kabinenbelüftung ist. Es ist vorgesehen, dass der erste Abschnitt eine Luftleitung sowie einen Auslass für die Kabinenbelüftung umfasst, die integriert mit der Trägerstruktur ausgebildet sind. Somit wird keine separate Luftleitung in dem ersten Abschnitt der Trägerstruktur aufgenommen, sondern dieser selbst bildet eine Luftleitung. Gleichermaßen umfasst der erste Abschnitt einen integriert ausgebildeten Auslass für die Kabinenbelüftung. Dies ist insbesondere vorteilhaft, da keine separaten Teile, wie eine separate Luftleitung und dergleichen, bereitgestellt und montiert werden müssen, wodurch Kosten, Montagezeiten und Gewicht der Anordnung reduziert werden können.
So kann beispielsweise die Luftleitung als Hohlprofil ausgebildet sein, das sich in Längsrichtung der Passagierkabine erstreckt. Das Hohlprofil kann direkt mit einem Auslass für die Kabinenbelüftung, beispielsweise einer Perforation oder einem Schlitz, die oder der an der Mantelfläche des Hohlprofils vorgesehen ist, versehen sein oder mit einem solchen durch einen Verbindungsabschnitt fluidisch verbunden sein.

Ferner weist der dritte Abschnitt erfindungsgemäß eine Versorgungsleitung auf, die durch wenigstens eine Verbindungsöffnung mit jeder der Vielzahl von Aufnahmen des dritten Abschnitts verbunden ist, wobei insbesondere jede Aufnahme des dritten Abschnitts zylinderförmig ausgebildet und durch eine Zylindermantelfläche und eine Stirnfläche begrenzt ist, und wobei insbesondere die wenigstens eine Verbindungsöffnung an der Stirnfläche der zylinderförmigen Aufnahme ausgebildet ist.
Die Versorgungsleitung des dritten Abschnitts der Trägerstruktur kann hierbei ebenfalls als ein sich in Längsrichtung der Passagierkabine erstreckendes Hohlprofil ausgebildet sein, welches als Luftleitung dient. Die Aufnahmen des dritten Abschnitts sind vorzugsweise jeweils durch wenigstens eine Verbindungsöffnung mit der Versorgungsleitung verbunden, so dass durch die Verbindungsöffnung Luft aus der Versorgungsleitung in die Aufnahmen einströmen kann. Alternativ kann die Versorgungsleitung natürlich auch zur Aufnahme einer separaten Luftleitung dienen, was jedoch zusätzliche, an der separaten Luftleitung ausgebildete Anschlussstellen im Bereich der Verbindungsöffnungen erfordern würde.

Jede Aufnahme ist vorzugsweise zylinderförmig ausbildet und durch eine Zylindermantelfläche und eine Stirnfläche begrenzt. Weder die Versorgungsleitung, noch die zylinderförmige Aufnahme weisen jedoch zwangsläufig einen kreisförmigen Querschnitt auf. Stattdessen ist es allein aus fertigungstechnischen Gesichtspunkten eher vorteilhaft, wenn die Querschnitte polygonförmig ausgebildet sind. Auf diese Weise ist es möglich, dass eine Seitenfläche der Versorgungsleitung gleichzeitig die begrenzenden Stirnflächen der einzelnen Aufnahmen bildet, welche daran angrenzen.

Die Zylindermantelflächen der Aufnahmen können ferner ebenfalls eine oder mehrere Ausnehmungen aufweisen, wodurch Material und Gewicht eingespart werden können.

Die Zylinderform der Aufnahmen ermöglicht es, die aktiven Module auf der nicht durch eine Stirnfläche begrenzten Seite in die Aufnahme einzuschieben bzw. aus dieser herauszuziehen. Dabei kann die Reibungskraft, die an den Kontaktflächen eines eingesetzten aktiven Moduls und der jeweiligen Aufnahme entsteht, bereits ausreichen, um das aktive Modul lösbar in der Aufnahme zu befestigen. Hierzu kann beispielsweise eine spezielle reibungserhöhende Oberfläche in einem Kontaktbereich des aktiven Moduls oder der Aufnahme vorgesehen sein.

Zusätzlich oder alternativ können jedoch auch lösbare Befestigungsmittel vorgesehen sein, wie beispielsweise korrespondierende Rasthaken und Ausnehmungen, Snapand-Click-Mechanismen und dergleichen, sowie magnetische Befestigungsmittel, die sowohl an der Aufnahme als auch an dem entsprechenden aktiven Modul angeordnet sind und miteinander eine lösbare Verbindung eingehen können.

Die Versorgungsleitung des dritten Abschnitts kann ferner eine Luftleitung sowie wenigstens eine Strom- und/oder Datenleitung umfassen.

Im einfachsten Fall kann, wie vorstehend bereits ausgeführt, die Versorgungsleitung nur eine Luftleitung aufweisen, entweder, indem sie selbst als luftleitendes Hohlprofil ausgebildet ist, oder indem eine separate Luftleitung in dieser aufgenommen ist. Zusätzlich ist es jedoch auch möglich, weitere Leitungen, beispielsweise Strom- und/oder Datenleitungen, in der Versorgungsleitung aufzunehmen. Diese können als isolierte Leitungskabel mit entsprechenden Anschlussstellen oder beispielsweise als nicht-isolierter Stromleiter, an denen ein Stromabnehmer durch leitenden Kontakt (Schleifkontakt, Federkontakt oder dergleichen) angeschlossen werden kann, ausgebildet sein. Schließlich kann jedoch auch eine kontaktlose Übertragung von Strom und Daten beispielsweise durch Induktion oder Resonanzfrequenz erfolgen.

Weiterhin kann jeder Aufnahme wenigstens ein Sensor zugeordnet sein, der dazu ausgebildet ist, zu ermitteln, ob die Aufnahme mit einem aktiven Modul bestückt ist.

Ein solcher Sensor kann beispielsweise als druckempfindlicher Sensor ausgebildet sein, der in der Aufnahme angeordnet ist und durch ein aktives Modul innerhalb der Aufnahme aktiviert werden kann. Andere Sensorarten, die dazu dienen, zu ermitteln, ob ein aktives Modul in der Aufnahme eingesetzt ist, sind jedoch ebenfalls denkbar.

Ein erfindungsgemäßes Versorgungssystem zur Versorgung von Passagieren in einem Passagierraum umfasst wenigstens eine Trägerstruktur mit den vorstehend genannten Merkmalen sowie wenigstens ein aktives Modul zur individuell einstellbaren Kabinenbelüftung.

Bei einer Weiterbildung kann das Versorgungssystems wenigstens ein weiteres, passives Modul aufweisen, wobei das passive Modul dazu ausgebildet ist, in wenigstens einer der Aufnahmen des dritten Abschnitts der Trägerstruktur aufgenommen zu werden, in der kein aktives Modul aufgenommen ist.

Wie vorstehend ausgeführt, weist der dritten Abschnitt der Trägerstruktur wenigstens so viele Aufnahmen auf, wie für eine maximale Anzahl von Sitzreihen bei einer maximalen Belegung der Passagierkabine notwendig sind, wobei jeder Sitzreihe wenigstens eine Aufnahme zugeordnet ist. Werden bei einer Erstkonfiguration oder eine Rekonfiguration der Passagierkabine die Sitzreihen jedoch in größeren Abständen angeordnet, ist es nicht mehr notwendig, in jeder Aufnahme ein aktives Modul vorzusehen; dadurch bleiben einige der Aufnahmen unbelegt. In diese können sogenannte passive Module eingesetzt werden. Die Bezeichnung "passives Modul" gibt in diesem Zusammenhang nur an, dass das eingesetzte Modul nicht Teil der individuell einstellbaren Kabinenbelüftung ist.

Es kann ferner vorgesehen sein, dass das aktive Modul wenigstens einen mit der Verbindungsöffnung des dritten Abschnitts korrespondierenden Anschlussstutzen aufweist, sowie wenigstens eine damit verbundene Luftdüse, wobei das aktive Modul insbesondere wenigstens eine Luftmengenregulierung aufweist, die der wenigstens einen Luftdüse zugeordnet ist, und wobei insbesondere die Luftmengenregulierung elektrisch ansteuerbar ist.

Der Anschlussstutzen lässt sich entweder in die Verbindungsöffnung des dritten Abschnitts einsetzen oder ist so dimensioniert, dass er sich auf einen die Verbindungsöffnung begrenzenden Kragen oder dergleichen aufsetzen lässt. Entscheidend ist dabei, dass Luft, die von der Versorgungsleitung durch die Verbindungsöffnung in die Aufnahme einströmen kann, durch den Anschlussstutzen in das aktive Modul eingeleitet wird. Dieses weist seinerseits wenigstens eine mit den Anschlussstutzen verbundene Luftdüse auf, wobei in der Praxis jeweils so viele Luftdüsen vorgesehen sind, dass für jeden Passagiersitz einer dem aktiven Modul zugeordnete Sitzreihe eine Luftdüse bereitgestellt wird.

Mit Hilfe der Luftdüsen lässt sich die Luftrichtung sowie die Auswurfcharakteristik der abgegebenen Luft einstellen, d.h. die Form des ausgeblasenen Luftstrahls, der breit aufgefächert oder eher punktförmig ausgebildet sein kann.

Weiterhin kann der Passagier im Regelfall die Menge der abgegebenen Luft durch Betätigung der Luftdusche regulieren. Dies erfolgt bei der vorliegenden Ausführungsform durch eine elektrisch ansteuerbare Luftmengenregulierung, die der jeweiligen Luftdüse zugeordnet ist. Eine solche Luftmengenregulierung kann beispielsweise durch einen elektrisch ansteuerbaren Motor mit oder ohne Scheiben zur Luftmengenregulierung oder dergleichen gebildet sein. Derartige Luftmengenregulierungen sind grundsätzlich aus dem Stand der Technik bekannt, so dass an dieser Stelle nicht näher hierauf eingegangen wird.

Die elektrische Ansteuerbarkeit der Luftmengenregulierung erfordert eine elektrische Versorgung der Luftmengenregulierung, die ebenfalls durch das aktive Modul bereitgestellt werden kann. Dieses kann im Bereich seines Anschlussstutzens oder an einer separaten Kontaktfläche einen Stromabnehmer oder Stecker aufweisen, durch den es mit einer Stromleitung der Versorgungsleitung verbunden werden und von dieser Strom abnehmen kann. Alternativ ist grundsätzlich auch das Vorsehen einer mechanisch ansteuerbaren Luftmengenregulierung möglich.

Das passive Modul kann einen mit der Verbindungsöffnung korrespondierenden Verbindungsabschnitt aufweisen, wobei das passive Modul insbesondere Bedien- oder Komfortelemente aufweisen kann, die durch die Verbindungsöffnung mit einer Daten- und/oder Stromleitung der Verbindungsleitung verbindbar sind.

Grundsätzlich ist es besonders vorteilhaft, dass das passive Modul im Verbindungsbereich ähnlich wie das aktive Modul ausgebildet ist, so dass dieses in gleicher Weise in die Verbindungsöffnung eingesetzt oder auf einen diese umgebenden Kragen oder dergleichen aufgesetzt werden kann.

Sowohl für das aktive als auch das passive Modul gilt, dass eine lösbare Befestigung des in der Aufnahme eingesetzten Elements beispielsweise durch die Verbindung von Anschlussstutzen bzw. Verbindungsabschnitt mit der Verbindungsöffnung erfolgen kann. Hierzu reicht gegebenenfalls bereits die entstehende Reibungskraft in einem Kontaktbereich des Anschlussstutzens bzw. Verbindungsabschnitt mit der Verbindungsöffnung aus. Die Reibungskraft, die an den Kontaktflächen des Anschlussstutzens bzw. Verbindungsabschnitt mit der Innenumfangsfläche der Verbindungsöffnung oder des Kragens entsteht, kann durch Vorsehen einer Reibfläche oder einer Beschichtung mit einem Material mit höherem Reibungskoeffizienten zusätzlich erhöht werden Alternativ können jedoch auch zusätzliche Befestigungsmittel, wie vorstehend bereits angeführt, vorgesehen sein.

Im Unterschied zu dem aktiven Modul bildet das passive Modul keinen Teil der individuell einstellbaren Kabinenbelüftung. Aus diesem Grund weist das passive Modul auch keine Luftdüsen oder dergleichen auf, durch die Luft, welche gegebenenfalls durch eine entsprechende Öffnung in den Verbindungsabschnitt in das passive Modul einströmt, an die Passagierkabine abgegeben werden kann.

Im einfachsten Fall ist das passive Modul derart ausgebildet, dass der Verbindungsabschnitt quasi wie ein Stopfen die Verbindungsöffnung einfach verschließt, so dass keine Luft mehr aus der Verbindungsleitung in die entsprechende Aufnahme einströmen kann.

Gegebenenfalls kann es jedoch auch sinnvoll sein, Luft durch die Verbindungsöffnung in das passive Modul einzuleiten, um hierdurch die Funktion eines Kühlkörpers umzusetzen.

Das passive Modul kann zudem Bedien- oder Komfortelemente aufweisen, wie beispielsweise Leseleuchten, Informationsanzeigen, Stewardessruftasten, Lautsprecher für ein Entertainmentsystem und dergleichen. Solche Bedien- oder Komfortelemente können weiterhin über das passive Modul mit Strom und/oder Daten versorgt werden, indem das passive Modul eine Verbindung durch die Verbindungsöffnung mit einer Daten- und/oder Stromleitung der Verbindungsleitung bereitstellt. Hierbei können im Bereich der Verbindungsöffnungen Schnittstellen, beispielsweise in Form von Aufnahmen für Steckverbinder oder dergleichen, an den Daten- und/oder Stromleitungen vorgesehen sein. Alternativ können jedoch auch andere Verbindungen, wie beispielsweise mittels Schleif- oder Federkontakt oder dergleichen zwischen einer Daten- und/oder Stromleitung und den Bedien- oder Kontrollelementen des passiven Moduls hergestellt werden.

Weiterhin kann das passive Modul in elektrischem Kontakt mit wenigstens einem aktiven Modul stehen.

Dieses ermöglicht, dass im Falle einer elektrisch ansteuerbaren Luftmengenregulierung das aktive Modul selbst keine elektrische Verbindung mit der Versorgungsleitung eingehen muss, sondern dies über ein benachbartes passives Modul erfolgen kann.

Insgesamt ist die Verwendung von zusätzlichen passiven Modulen besonders vorteilhaft, da der zur Verfügung stehende Bauraum in Form der unbelegten Aufnahmen des dritten Abschnitts der Trägerstruktur mit Hilfe der aufgenommenen passiven Module sicher von außen, d.h. von Seiten der Passagierkabine, abgedeckt werden kann und gegebenenfalls gleichzeitig zur Umsetzung weiterer Funktionen genutzt werden kann.

Das erfindungsgemäße Verfahren zur Konfiguration eines Versorgungssystems mit den vorstehend genannten Merkmalen in einer Passagierkabine eines Flugzeugs umfasst die Schritte: Ermitteln einer Bestückung der Trägerstruktur anhand einer vorbestimmten Belegung der Passagierkabine mit einer Anzahl von Sitzreihen, die in einem vorbestimmten Abstand angeordnet sind, wobei jeder Sitzreihe wenigstens ein aktives Modul zugeordnet wird; und Einsetzen von aktiven Modulen gemäß der ermittelten Bestückung der Trägerstruktur.

Beispielsweise kann bei einer maximalen Belegung der Passagierkabine mit einer maximalen Anzahl von Sitzreihen, die in einem vorbestimmten minimalen Abstand angeordnet sind, wobei jeder Sitzreihe wenigstens eine Aufnahme zugeordnet ist, in jeder dafür vorgesehenen Aufnahme der Trägerstruktur ein aktives Modul eingesetzt und lösbar befestigt werden.

Weiterhin kann das Verfahren, beispielsweise im Rahmen einer Rekonfiguration des Kabinenlayouts, den folgenden Schritt umfassen: Einsetzen von passiven Modulen in die Aufnahmen des dritten Abschnitts der Trägerstruktur, in denen kein aktives Modul aufgenommen ist.

Wird folglich eine Belegung der Passagierkabine mit Sitzreihen vorbestimmt, die weniger Sitzreihen vorsieht als bei einer maximalen Belegung, so sind die Abstände zwischen den einzelnen Sitzreihen im Regelfall größer als bei einer maximalen Belegung der Passagierkabine. Infolgedessen sind auch die Abstände zwischen den aktiven Modulen, die jeweils den Sitzreihen zugeordnet sind, größer, wodurch einzelne Aufnahmen der Trägerstruktur gegebenenfalls nicht mehr mit einem aktiven Modul belegt werden. In diese Aufnahmen können dann passive Module eingesetzt werden, die die vorstehend genannten Merkmale aufweisen können.

Weiterhin ist es zusätzlich möglich, beim Ermitteln einer Bestückung der Trägerstruktur jeder Sitzreihe auch eine vorbestimmte Anzahl von Bauteilen zur Notversorgung der Passagiere mit Sauerstoff zuzuordnen. Diese können dann bei der Konfiguration oder Rekonfiguration ebenfalls in die Trägerstruktur, nämlich in den zweiten Abschnitt der Trägerstruktur, eingesetzt werden.

Weiterhin kann das Verfahren den Schritt umfassen: Ermitteln einer Bestückung für jede Aufnahme des dritten Abschnitts mit Hilfe von Sensoren, wobei diese ermitteln, ob eine Aufnahme mit einem aktiven Modul bestückt ist.

Bei dieser Ausführungsform kann folglich nicht nur mit Hilfe von Sensoren ermittelt werden, ob eine Aufnahme mit einem Modul bestückt ist oder frei ist, sondern auch, ob es sich bei dem eingesetzten Modul um ein aktives oder ein passives Modul handelt. Hierzu können wiederum beispielsweise Drucksensoren verwendet werden, wobei gegebenenfalls eine Aussparung oder ein Vorsprung dazu dienen, ein aktives Modul von einem passiven Modul zu unterscheiden, so dass ein Drucksensor beispielsweise nur von einem Typ Modul aktiviert wird.

Weiterhin kann es sinnvoll sein, unterschiedliche Arten von passiven Modulen vorzusehen, z.B. solche, die ein Bedien- oder Komfortelement aufweisen (passives Modul mit Zusatzfunktion) und solche, die nur zum Abdecken und Abdichten dienen. In einem solchen Fall ist es besonders günstig, mehrere Sensoren vorzusehen, nämlich wenigstens einen für ein aktives und einen für ein passives Modul mit Zusatzfunktion. Alternative Gestaltungsmöglichkeiten mit anderen Sensorarten sind selbstverständlich ebenfalls denkbar.

In gleicher Weise können auch für die Bestückung des zweiten Abschnittes mit Bauteilen der Sauerstoff-Notfallversorgung Sensoren vorgesehen sein, mit deren Hilfe ermittelt werden kann, ob in einem vorbestimmten Bereich des zweiten Abschnittes die vorgegebenen Bauteile eingesetzt sind oder nicht.

Schließlich kann das Verfahren weiter die Schritte umfassen: Vergleichen der ermittelten Bestückung der Trägerstruktur mit einer vorgegebenen Bestückung; und Ausgeben einer Rückmeldung über eine Übereinstimmung oder Abweichung der ermittelten Bestückung der Trägerstruktur mit oder von der vorgegebenen Bestückung.

Die "ermittelte Bestückung der Trägerstruktur" kann dabei wiederum sowohl die Bestückung mit aktiven und/oder passiven Modulen als auch mit Bauteilen zur Notfallversorgung der Passagiere mit Sauerstoff umfassen. Alternativ kann sich die "ermittelte Bestückung der Trägerstruktur" jedoch auch auf die Bestückung des dritten Abschnitts mit aktiven Modulen beschränken. Gegebenenfalls können, wie vorstehend beschrieben, auch unterschiedliche Arten von passiven Modulen verwendet werden und bei der ermittelten Bestückung der Trägerstruktur diese als unterschiedliche Module ebenfalls berücksichtigt werden.

Das Ausgeben einer Rückmeldung kann auf unterschiedliche Weise, beispielsweise über ein akustisches Signal oder eine optische Anzeigeeinheit, erfolgen. So ist denkbar, dass z.B. an jedem der einsetzbaren Module, sei es ein aktives oder ein passives Modul, ein Lämpchen oder dergleichen für einen Anwender bei der Konfiguration sichtbar angeordnet sind. Dieses kann bei einer Abweichung der ermittelten Bestückung von der vorgegebenen Bestückung aufleuchten und dem Anwender angeben, dass das eingesetzte Modul an der falschen Stelle platziert ist. Selbstverständlich kann auch vorgesehen sein, dass das Lämpchen im umgekehrten Fall leuchtet, also nur bei Übereinstimmung der ermittelten Bestückung mit der vorgegebenen Bestückung. Alternativ oder zusätzlich kann ebenfalls eine Anzeige im Cockpit dem Personal anzeigen, ob die Passagierkabine gemäß dem vorgegebenen Layout bestückt worden ist.

Für die Ausgabe der Rückmeldung können in gleicher Weise vorgesehene Strom- und/oder Datenleitungen genutzt werden, die in der Versorgungsleitung bereitgestellt und mit einer zentralen Datenausgabeeinheit verbunden sind, wie beispielsweise für die elektrische Ansteuerung einer Luftmengenregulierung, für zusätzliche Bedien- oder Komfortelemente und dergleichen. Besonders vorteilhaft ist es hierbei, wenn bei der ermittelten Bestückung der Trägerstruktur nicht nur die aktiven und passiven Module berücksichtigt werden, sondern auch die Anzahl und Position von Bauteilen zur Notfallversorgung der Passagiere mit Sauerstoff, da diese sicherheitsrelevant sind.

Das Ermitteln einer Bestückung der Trägerstruktur anhand einer vorbestimmten Belegung der Passagierkabine kann beispielsweise basierend auf Daten einer Datenbasis erfolgen, die sowohl charakteristische Daten der bestückbaren Module und Bauteile umfasst als auch Regeln zur Konfiguration. Basierend auf der gewünschten Belegung der Passagierkabine können die Abstände der Sitzreihen vorgegeben werden, dementsprechend die mit aktiven Modulen zu besetzenden Aufnahmen der Trägerstruktur und, falls die passiven Module mit unterschiedlichen Bedien- oder Kontrollelementen versehen sind, die jeweilige Bestückung der restlichen Aufnahmen mit den entsprechenden passiven Modulen. Gleichfalls ist auch abhängig von der Belegung der Passagierkabine die Notfallversorgung der Passagiere mit Sauerstoff anzupassen, welche ebenfalls mit Hilfe von Sensoren ermittelt werden kann.

Eine bevorzugte Ausführungsform der Erfindung wird nun anhand der beigefügten, schematischen Figuren näher erläutert, von denen:
- Figur 1: eine isometrische Teilansicht einer erfindungsgemäßen Trägerstruktur einer Luftzufuhranordnung zeigt,
- Figur 2: eine isometrische Teilansicht eines erfindungsgemäßen Versorgungssystems mit einer Trägerstruktur nach Figur 1 zeigt,
- Figur 3: eine isometrische Ansicht eines erfindungsgemäßen Versorgungssystems mit einem passiven Modul zeigt,
- Figuren 4a und b: jeweils ein aktives bzw. passives Modul für ein erfindungsgemäßes Versorgungssystem nach Figur 3 zeigen, und
- Figuren 5 und 6: eine mögliche Einbausituation des erfindungsgemäßen Versorgungssystems in einem Passagierinnenraum zeigen.

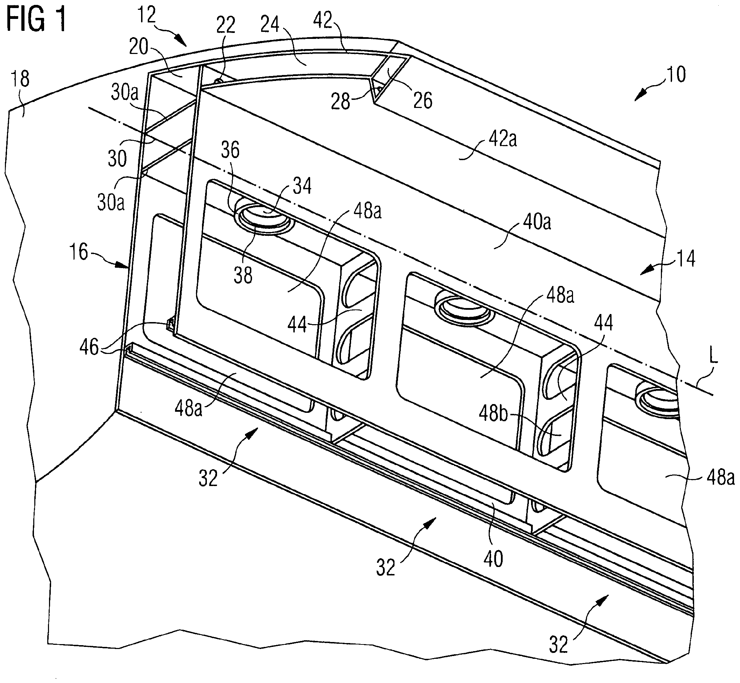

Figur 1 zeigt eine erfindungsgemäße Trägerstruktur in teilgeschnittener, isometrischer Darstellung, die nachfolgend mit dem Bezugszeichen 10 versehen ist. Die Trägerstruktur 10 zum Einsatz in einer Luftzufuhranordnung für die Klimatisierung von Passagierkabinen in Flugzeugen weist im wesentlichen drei Abschnitte auf, nämlich einen ersten Abschnitt 12, einen zweiten Abschnitt 14 sowie einen dritten Abschnitt 16.

Der erste Abschnitt 12 und der dritte Abschnitt 16 sind zueinander im wesentlichen wie zwei Seiten eines Dreiecks angeordnet, die zwischen sich einen Raum aufspannen. Dieser bezeichnet den zweiten Abschnitt 14, der einen notwendigen Bauraum zur Aufnahme und/oder Integration von Bauteilen einer Notfallversorgung der Passagiere mit Sauerstoff innerhalb der Passagierkabine bereitstellt. Derartige Bauteile einer Notfallversorgung können beispielsweise Sauerstoffversorgungseinheiten mit einer bestimmten Anzahl von Sauerstoffmasken sein, die jeweils hinter einer Klappe oder dergleichen angeordnet sind, welche zum automatischen Öffnen im Notfall ausgeführt ist. Die Öffnung einer solchen Klappe kann durch einen Stromstoß oder durch ein Datensignal aktiviert werden.

Der erste Abschnitt 12 dient zur Aufnahme und/oder Integration von Bauteilen der zentral geregelten Kabinenbelüftung. In der in Figur 1 dargestellten Ausführungsform sind die entsprechenden Bauteile integral mit der Trägerstruktur 10 ausgebildet, wodurch eine vorteilhafte Teilereduzierung erzielt wird. Der erste Abschnitt 12 weist hierbei eine als Hohlprofil 20 ausgebildete Luftleitung auf, einen Verbindungsbereich 24 und einen Auslassabschnitt 26, wobei der Verbindungsbereich 24 die Luftleitung 20 mit dem Auslassabschnitt 26 verbindet.

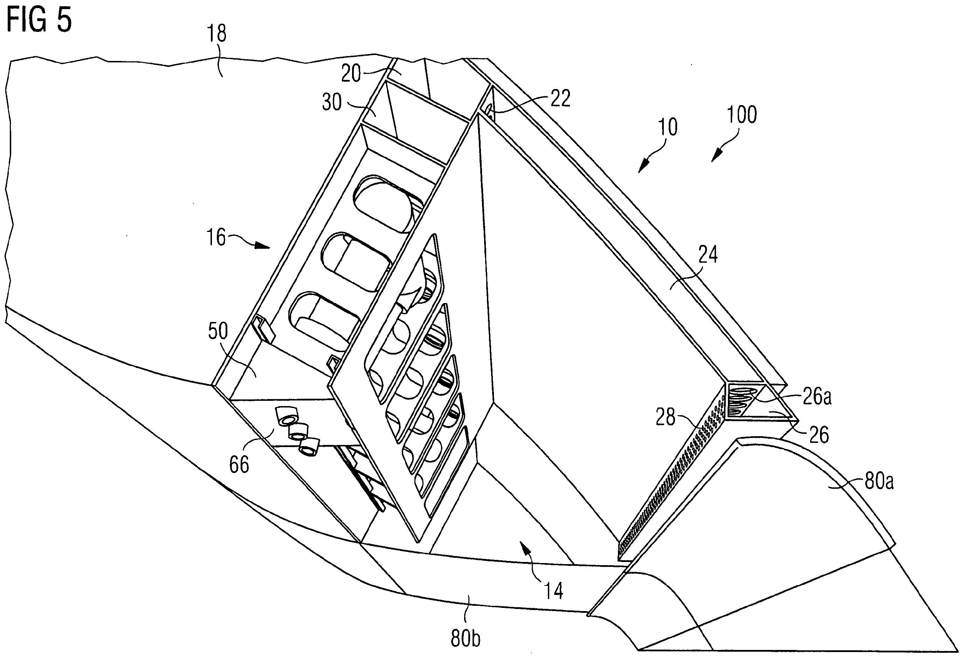

Die Trägerstruktur 10 erstreckt sich entlang einer Längsachse L, die im eingebauten Zustand der Trägerstruktur 10 im wesentlichen parallel zu der Längsachse einer Passagierkabine eines Flugzeugs ist. Dabei ist die Trägerstruktur 10 an den rückwärtigen Seitenflächen der in der Flugzeugkabine vorgesehenen Gepäckstaufächer 18 und einer angrenzenden Innenfläche des Passagierraums angebracht (vgl. auch Fig. 5).

Die Luftleitung 20 und der Auslassabschnitt 26 sind beide durch ein Hohlprofil gebildet, das sich parallel zu der Längsachse der Passagierkabine erstreckt. Dementsprechend verläuft auch der Verbindungsbereich 24 entlang der Längsachse der Passagierkabine. Die Hohlprofile der Luftleitung 20 wie auch des Auslassabschnitts 26 weisen jeweils an ihren an den Verbindungsbereich 24 angrenzenden Seitenflächen Durchgangsöffnungen 22 und 26a auf, durch die Luft, welche von einem zentral geregelten Flugzeugklimasystem in die Luftleitung 20 zugeführt wird, in den Auslassabschnitt 26 strömen kann. Dieser weist ferner an einer zweiten Seitenfläche Auslassöffnungen 28 auf, welche ein Ausströmen der zugeführten Luft in den Kabineninnenbereich ermöglichen.

Der dritte Abschnitt 18 dient grundsätzlich zur individuell einstellbaren Kabinenbelüftung einer Passagierkabine. Hierzu weist er eine Versorgungsleitung 30 auf, die sich im wesentlichen parallel zu der Längsachse der Passagierkabine und damit auch parallel zu der Luftleitung 20 erstreckt, sowie eine Vielzahl von Aufnahmen 32, die durch Verbindungsöffnungen 34 jeweils mit der Versorgungsleitung 30 verbunden sind. In die Aufnahmen 32 können separate aktive Module 50 zur individuell einstellbaren Kabinenbelüftung eingesetzt werden.

Die dargestellte Trägerstruktur 10 setzt sich aus wenigen Einzelteilen zusammen, die in ihrem zusammengebauten Zustand zur gerichteten Leitung von Luft und zur Aufnahme von Bauteilen dienen können. Dabei weist die Trägerstruktur 10 zwei im wesentlichen ebene Platten 40 und 40a auf, nachfolgend als erste Anlageplatte 40 und erste Innenplatte 40a bezeichnet, zwei leicht gekrümmte Platten, die nachfolgend als zweite Anlageplatte 42 und zweite Innenplatte 42a bezeichnet sind, sowie einige Abstandsplatten, nachfolgend als erste Abstandsplatten 30a und zweite Abstandsplatten 44 bezeichnet, und ein sich längs erstreckendes Hohlprofil. Diese Teile können beispielsweise miteinander verschweißt, verlötet, verklebt oder in sonstiger Weise miteinander verbunden sein und so die Trägerstruktur 10 bilden.

Die beiden ebenen Platten 40, 40a sind in einem definierten Abstand parallel zueinander angeordnet, wobei die ersten und zweiten Abstandsplatten 30a, 44 im wesentlichen senkrecht zu diesen zwischen ihnen angeordnet sind. Dabei sind die jeweils ersten Abstandsplatten und die jeweils zweiten Abstandsplatten ebenfalls zueinander parallel ausgerichtet. Auf diese Weise begrenzen die ersten Abstandsplatten 30a zusammen mit den zwei im wesentlichen flachen Platten 40, 40a die Versorgungsleitung 30 des dritten Abschnitts 16, während die zweiten Abstandsplatten 44 zusammen mit einer ersten Abstandsplatte 30a und den im wesentlichen ebenen Platten 40, 40a die zylinderförmigen Aufnahmen 32 bilden.

Die im wesentlichen gekrümmten Platten 42 und 42a weisen einen ähnlichen Krümmungsradius auf. Sie bilden zusammen mit dem Hohlprofil 26 den Verbindungsbereich 24 und den Auslassabschnitt 26 des ersten Abschnitts 12. Dadurch dass die zweite Anlageplatte 42 mit einer Seitenkante an der ersten Anlageplatte 40 anliegt, begrenzt dieses zudem mit einer der ersten Abstandsplatten 30a und der ersten Innenplatte 40a die Luftleitung 20 des ersten Abschnitts 12.

Neben den bereits beschriebenen Durchgangsöffnungen 22 und 26a, den Auslassöffnungen 28 und den Verbindungsöffnungen 34 weisen die im wesentlichen ebenen Platten 40 und 40a sowie die zweiten Innenplatten 42a Ausnehmungen 48a und b auf, die zur Gewichtsreduktion der Trägerstruktur 10 beitragen.

Auf diese Weise wird nicht nur eine einfach herzustellende, sondern auch kostengünstige und leichtgewichtige Trägerstruktur für eine Luftzufuhranordnung in einem Flugzeug bereitgestellt.

Die Verbindungsöffnungen 34 weisen in der dargestellten Ausführungsform allesamt einen in die Aufnahmen 32 hineinragenden Kragen 36 mit einer inneren Schulter 38 auf. Ausgehend von dem freien Ende des Kragens 36 weist dieser in einem ersten Abschnitt einen ersten größeren Durchmesser und in einem zweiten Abschnitt einen zweiten kleineren Durchmesser auf, wobei die beiden Abschnitte durch die Schulter 38 miteinander verbunden sind. Der Kragen 36 dient allgemein zur Stabilisierung der Verbindung von Modulen, die in den Aufnahmen 32 aufgenommen sind, mit der Versorgungsleitung 30.

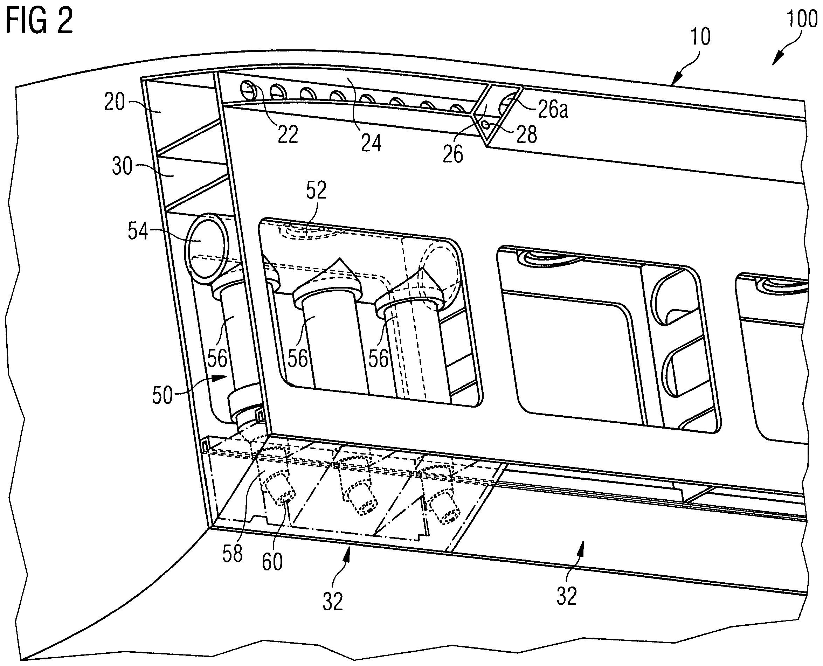

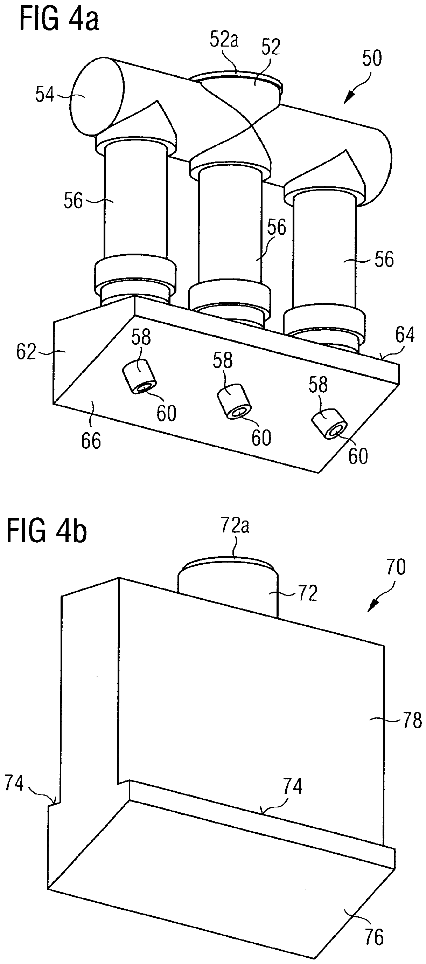

Figur 2 zeigt ein erfindungsgemäßes Versorgungssystem 100 mit einer Trägerstruktur 10 gemäß Figur 1, wobei in der (von links betrachtet) ersten Ausnehmung 32 ein aktives Modul 50 eingesetzt ist. Wie auch aus Figur 4a ersichtlich, weist ein solches aktives Modul 50 einen Anschlussstutzen 52 auf, der zumindest abschnittsweise in die Verbindungsöffnung 34 eingesetzt werden kann. Um eine möglichst luftdichte Verbindung des aktiven Moduls 50 mit der Versorgungsleitung 30 zu ermöglichen, weist der Anschlussstutzen 52 an seinem freien Ende eine Dichtung 52a auf. Diese kann als Dichtfläche, als separater Dichtring oder dergleichen ausgebildet sein, wobei der Durchmesser an den Innendurchmesser des Kragens 36 angepasst ist. Die Dichtung 52a kann ferner so ausgebildet sein, dass sie eine im Kontaktbereich von Anschlussstutzen 52 und der Innenumfangsfläche des Kragens 36 auftretende Reibungskraft erhöht, so dass das aktive Modul 50 hierdurch in der Aufnahme 32 gehalten wird.

Ist ein aktives Modul 50 über seinen Anschlussstutzen 52 mit der Verbindungsöffnung 34 verbunden, so strömt Luft aus der Versorgungsleitung 30 in den Anschlussstutzen 52 ein und wird von dort durch einen Luftverteilungsstutzen 54 auf mehrere Luftzuleitungsstutzen 56 verteilt. In deren Inneren ist, wie in Figur 2 erkennbar, eine Luftmengenregulierung 56a vorgesehen, welche beispielsweise elektronisch ansteuerbar ist. Eine Luftmengenregulierung 56a kann beispielsweise durch einen entsprechenden Motor mit oder ohne Scheiben oder dergleichen umgesetzt sein und dient dazu, die Menge der in die Passagierkabine einströmenden Luft zu regulieren.

Um eine individuell einstellbare Kabinenbelüftung zu ermöglichen, ist daher jeder Luftdüse 58 eine separate Luftmengenregulierung 56 zugeordnet, die von den Passagieren individuell eingestellt werden kann. Mit Hilfe der Luftdüse 58 kann zusätzlich sowohl die Luftrichtung der durch eine Ausblasöffnung 60 ausgegebenen Luft bestimmt werden, da die Luftdüsen in bekannter Weise relativ zu dem Kopfstück 62 des aktiven Moduls 50 verdreht werden können, als auch die Auswurfcharakteristik der ausströmenden Luft, indem die Ausblasöffnung 60 verändert wird.

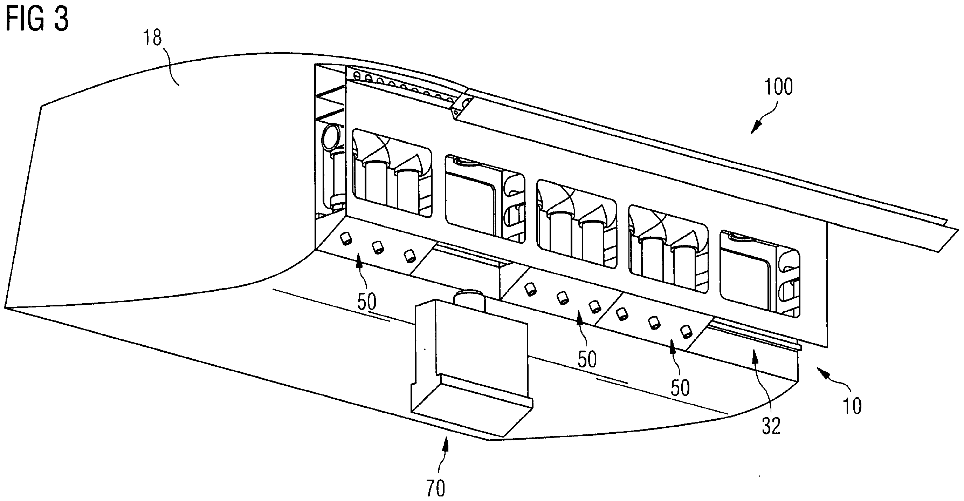

Figur 3 zeigt ein Versorgungssystem 100 mit mehreren aktiven Modulen 40 und einem passiven Modul 70. Die Trägerstruktur 10 ist, wie auch in den Figuren 1 und 2, mit ihrer ersten und zweiten Anlageplatte 40 und 42 an einer rückwärtigen Seitenfläche eines in der Passagierkabine vorgesehenen Gepäckfachs 18 und an einer Innenfläche des Passagierraums befestigt.

In der Trägerstruktur 10 sind in der (von links betrachtet) ersten, dritten und vierten Aufnahme 32 aktive Module 50 eingesetzt, während ein passives Modul 70 im Begriff ist, in die (von links betrachtet) zweite Ausnehmung 32 eingesetzt zu werden. Ein solches passives Modul 70 ist ferner auch in Figur 4b gezeigt.

Im Unterschied zu einem aktiven Modul zur individuell einstellbaren Kabinenbelüftung, stellt ein sogenanntes passives Modul 70 kein Bauteil der individuell einstellbaren Kabinenbelüftung dar. In seiner äußeren Geometrie stimmt das passive Modul 70 insoweit mit dem aktiven Modul 52 überein, als dies notwendig ist, damit das passive Modul 70 ebenfalls in die Aufnahmen 32 einer erfindungsgemäßen Trägerstruktur 10 eingesetzt werden kann.

Demnach weist das passive Modul 70 einen Verbindungsabschnitt 72 zur Verbindung mit einer Verbindungsöffnung 34 der Aufnahme 32 auf, dessen äußerer Durchmesser mit dem des Anschlussstutzens 52 übereinstimmt. Weiterhin ist an dem Verbindungsabschnitt 72 eine mit der Schulter 38 des Kragens 36 korrespondierende Dichtschulter 72a ausgebildet.

Der Modulkörper 78 weist an seinem von dem Verbindungsabschnitt 72 abgewandten Ende Anschlagschultern 74 sowie eine Anschlussfläche 76 auf. Die Anschlagschultern 74 entsprechen im wesentlichen der Anschlagfläche 64 der aktiven Moduls 50. Die Anschlagfläche 64 bzw. Anschlagschultern74 dienen sowohl bei einem aktiven als auch bei einem passiven Modul dazu, dieses in der Aufnahme 32 korrekt zu positionieren und gegebenenfalls unter Zuhilfenahme eines gesonderten Befestigungsmechanismus an der Trägerstruktur 10 zu befestigen.

Ein solcher Befestigungsmechanismus kann beispielsweise zwei Befestigungsschienen 46 aufweisen, die im Bereich des dritten Abschnitts 16 an der Trägerstruktur 10 angeordnet sind. Die Module 50, 70 können im Bereich ihrer Anschlagfläche 64 bzw. Anschlagschulter 74 korrespondierende Befestigungselemente (nicht dargestellt) aufweisen, die unter Druck bei einer Bewegung des Moduls in die Aufnahme 32 hinein in den Befestigungsschienen 46 einrasten (Snap- and- Click- Mechanismus). Alternative Befestigungsanordnungen mit mechanischen, magnetischen oder sonstigen Befestigungsmitteln sind ebenfalls denkbar.

Figur 5 zeigt das erfindungsgemäße Versorgungssystem 100 in einer Einbausituation mit entsprechenden Verkleidungselementen 80a, 80b der Passagierinnenraumverkleidung. Der zweite Abschnitt 14 wird dabei durch ein Verkleidungselement 80b begrenzt, das sich beispielsweise in der Art einer Klappe öffnen kann, wenn in einem Notfall diese durch einen Stromstoß oder durch ein Datensignal aktiviert wird. In dem zweiten Abschnitt 14 aufgenommene Bauteile einer Notversorgung mit Sauerstoff, wie beispielsweise Sauerstoffmasken, welche mit einer Sauerstoffversorgung verbunden sind, können dann aus dem zweiten Abschnitt 14 in den Passagierinnenraum fallen oder gezogen werden.

Alternativ können zusätzlich zu Bauteilen einer Sauerstoff-Notversorgung der Passagiere auch weitere Bauteile in dem zweiten Abschnitt 14 aufgenommen werden, sofern der zur Verfügung stehende Bauraum dies erlaubt.

Wie man in Figur 5 weiterhin deutlich erkennen kann, sind die aktiven Module 50 und somit auch die passiven Module 70, wie in Figur 4b gezeigt, derart dimensioniert, dass ihre Anschlussfläche 66 bündig mit der Innenraumverkleidung der Passagierkabine abschließt. Alternativ kann auf die Anschlussfläche 66 selbstverständlich auch ein zusätzliches Verkleidungselement aufgebracht werden, jedoch ist es vorteilhafter, wenn die aktiven Module 50, wie auch die passiven Module 70, nicht mehr zusätzlich verkleidet werden müssen, da hierdurch die Anzahl der Verkleidungselemente reduziert werden kann.

Weisen die passiven Module 70 keine Zusatzfunktionen auf, so dienen sie mit ihrer Anschlussfläche 76 als Verkleidungselement der ungenutzten Aufnahmen 32, wobei sie zugleich eine Dichtfunktion erfüllen, indem sie mit ihrem Verbindungsabschnitt 72 die Verbindungsöffnung 34 dichtend abschließen.

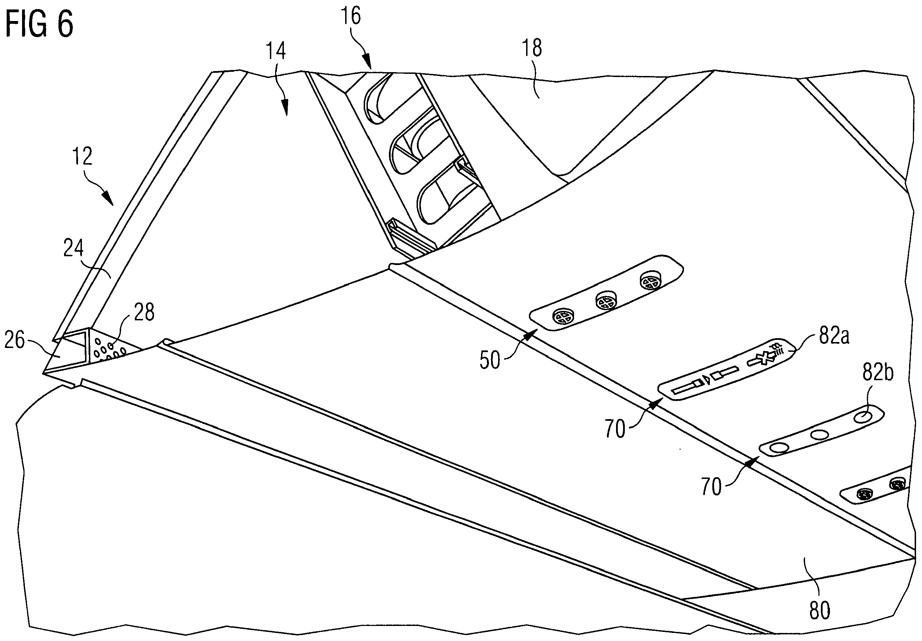

Wie in Figur 6 zu erkennen ist, können die passiven Module 70 jedoch auch Bedienund Komfortelemente, wie die dargestellten Informationsanzeigen 82a oder die Leseleuchte 82b, sowie (nicht dargestellt) Stewardessruftasten, Lautsprecher und dergleichen aufweisen (passive Module mit Zusatzfunktion). In diesem Fall verfügen die passivem Module 70 im Bereich ihres Verbindungsabschnitts 72 über zusätzliche Elemente, die eine Verbindung mit Strom- und/oder Datenleitungen ermöglichen, welche zu diesem Zweck in der Versorgungsleitung 30 geführt werden können. Weiterhin können mit Hilfe der passiven Module 70 auch die Luftmengenregulierungen 56a der aktiven Elemente 50 mit Strom versorgt und gesteuert werden, indem zwischen dem passiven und aktiven Modul entsprechende Verbindungen vorgesehen sind.

Es ist darüber hinaus auch möglich, wenn ein passives Modul 70 ebenfalls einen Anschlussstutzen zur Verbindung mit der Verbindungsöffnung 34 aufweist, durch den Luft in das passive Modul einströmen kann, dieses als Kühlelement für die umgebenden aktiven Module zu nutzen und auf diese Weise separate Kühlelemente einzusparen.

In Figur 6 ist auch ersichtlich, dass die einzelnen Luftdüsen 58 nicht nur, wie in Figur 5 gezeigt, in Längsrichtung der Passagierkabine hintereinander, sondern auch nebeneinander angeordnet sein können, wie es bei einer entsprechenden Sitzbelegung vorteilhaft sein kann.

Aufgrund ihrer speziellen Geometrie stellt die erfindungsgemäße Trägerstruktur sowohl einen Abschnitt für Bauteile der zentral geregelten Kabinenbelüftung als auch einen Abschnitt für Bauteile der individuell einstellbaren Kabinenbelüftung bereit. Zwischen den beiden Abschnitten erstreckt sich ferner ein weiterer Abschnitt, der Bauraum für Bauteile einer Notversorgung der Passagiere mit Sauerstoff und gegebenenfalls auch andere Komponenten bereitstellt. Die Trägerstruktur weist eine Vielzahl von definierten Aufnahmen für aktive Module zur individuell einstellbaren Kabinenbelüftung auf. Aufgrund dieser Aufnahmen können die Module in definierten Abständen zueinander eingesetzt werden, ohne dass die aus dem Stand der Technik bekannte Problematik der genauen Überwachung der Position sowie der Spaltmaße auftritt. Weiterhin wird durch die lösbare Befestigung der aktiven Module in Aufnahme der Trägerstruktur auch eine einfache Rekonfiguration der individuell einstellbaren Kabinenbelüftung und somit des Kabinenlayouts ermöglicht.

Durch Vorsehen einer speziellen Sensorik kann zudem auch die Überwachung der jeweiligen Konfiguration der aktiven Module als auch der Bauteile der Notfallversorgung mit Sauerstoff überwacht werden.

Werden die Abstände zwischen den Sitzreihen vergrößert, können zusätzlich zu den vorgesehenen aktiven Modulen auch passive Module in die Trägerstruktur eingesetzt werden, die zumindest eine luftdichte Abdeckung der nicht mit einem aktiven Modul besetzten Aufnahme ermöglichen. Darüber hinaus können die passive Module jedoch auch weitere Zusatzfunktionen übernehmen, beispielsweise können sie als Kühlelemente fungieren oder zusätzliche Bedien- und Komfortelemente für die Passagiere bereitstellen.

## Patentansprüche

1. Trägerstruktur (10) zum Einsatz in einer Luftzufuhranordnung für die Klimatisierung von Passagierkabinen in Flugzeugen, wobei die Luftzufuhranordnung wenigstens eine zentral geregelte Kabinenbelüftung sowie eine individuell einstellbare Kabinenbelüftung umfasst, und
wobei die Trägerstruktur (10) aufweist:
- einen ersten Abschnitt (12) zur Integration von Bauteilen der zentral geregelten Kabinenbelüftung, wobei der erste Abschnitt (12) eine Luftleitung (20) sowie einen Auslass (28) für die zentral geregelte Kabinenbelüftung umfasst, die integriert mit der Trägerstruktur (10) ausgebildet sind,
- einen zweiten Abschnitt (14) zur Aufnahme und/oder Integration von Bauteilen einer Notfallversorgung der Passagiere mit Sauerstoff und
- einen dritten Abschnitt (16) mit einer Vielzahl von Aufnahmen (32), wobei jede Aufnahme (32) dazu ausgebildet ist, ein aktives Modul (50) zur individuell einstellbaren Kabinenbelüftung aufzunehmen und lösbar zu befestigen, und wobei der dritte Abschnitt (16) wenigstens so viele Aufnahmen (32) aufweist, dass jeder Sitzreihe unabhängig von der Passagierkabinensitzreihenkonfiguration wenigstens eine Aufnahme (32) zugeordnet ist, sowie einer Versorgungsleitung (30), die durch wenigstens eine Verbindungsöffnung (34) mit jeder der Vielzahl von Aufnahmen (32) des dritten Abschnitts (16) verbunden ist.

2. Trägerstruktur (10) nach Anspruch 1,
wobei jede Aufnahme (32) des dritten Abschnittes (16) zylinderförmig ausgebildet ist und durch eine Zylindermantelfläche und eine Stirnfläche begrenzt ist und wobei insbesondere die wenigstens eine Verbindungsöffnung (34) an der Stirnfläche der zylinderförmigen Aufnahme (32) ausgebildet ist.

3. Trägerstruktur (10) nach einem der vorhergehenden Ansprüche,
wobei die Versorgungsleitung (30) eine Luftleitung sowie wenigstens eine Strom- und/oder Datenleitung umfasst.

4. Trägerstruktur (10) nach einem der vorhergehenden Ansprüche,
wobei jeder Aufnahme (32) wenigstens ein Sensor zugeordnet ist, der dazu ausgebildet ist, zu ermitteln, ob die Aufnahme (32) mit einem aktiven Modul (50) bestückt ist.

5. Versorgungssystem (100) zur Versorgung von Passagieren in einem Passagierraum umfassend wenigstens eine Trägerstruktur (10) nach einem der vorhergehenden Ansprüche sowie wenigstens ein aktives Modul (50) zur individuell einstellbaren Kabinenbelüftung.

6. Versorgungssystem (100) nach Anspruch 5,
das wenigstens ein weiteres, passives Modul (70) aufweist, wobei das passive Modul (70) dazu ausgebildet ist, in wenigstens einer der Aufnahmen (32) des dritten Abschnitts (16) der Trägerstruktur (10) aufgenommen zu werden, in der kein aktives Modul (50) aufgenommen ist.

7. Versorgungssystem (100) nach Anspruch 6,
wobei das aktive Modul (50) wenigstens einen mit der Verbindungsöffnung (34) des dritten Abschnitts (16) korrespondierenden Anschlussstutzen (52) aufweist sowie wenigstens eine damit verbundene Luftdüse (58), wobei das aktive Modul (50) insbesondere wenigstens eine Luftmengenregulierung (56a) aufweist, die der wenigstens einen Luftdüse (58) zugeordnet ist, und wobei insbesondere die Luftmengenregulierung (56a) elektrisch ansteuerbar ist.

8. Versorgungssystem (100) nach einem der Ansprüche 6 oder 7,
wobei das passive Modul (70) einen mit der Verbindungsöffnung (34) korrespondierenden Verbindungsabschnitt (72) aufweist und wobei das passive Modul (70) insbesondere Bedien- oder Komfortelemente (82a, 82b) aufweisen kann, die durch die Verbindungsöffnung (34) mit einer Daten- und/oder Stromleitung der Verbindungsleitung (30) verbindbar sind.

9. Verfahren zur Konfiguration eines Versorgungssystems (100) nach den Ansprüchen 5 bis 8 in einer Passagierkabine eines Flugzeugs, mit den Schritten:
- Ermitteln einer Bestückung der Trägerstruktur (10) anhand einer vorbestimmten Belegung der Passagierkabine mit einer Anzahl von Sitzreihen, die in einem vorbestimmten Abstand angeordnet sind, wobei jeder Sitzreihe wenigstens ein aktives Modul (50) zugeordnet wird; und
- Einsetzen von aktiven Modulen (50) gemäß der ermittelten Bestückung der Trägerstruktur (10).

10. Verfahren nach Anspruch 9,
umfassend den weiteren Schritt:
- Einsetzen von passiven Modulen (70) in die Aufnahmen (32) des dritten Abschnittes (16) der Trägerstruktur (10), in denen kein aktives Modul (50) aufgenommen ist.

11. Verfahren nach Anspruch 10,
umfassend den weiteren Schritt:
- Ermitteln einer Bestückung für jede Aufnahme (32) des dritten Abschnittes (16) mit Hilfe von Sensoren, wobei diese ermitteln, ob eine Aufnahme (32) mit einem aktiven Modul (50) bestückt ist.

12. Verfahren nach Anspruch 11,
umfassend die weiteren Schritte:
- Vergleichen der ermittelten Bestückung der Trägerstruktur (10) mit einer vorgegebenen Bestückung; und
- Ausgeben einer Rückmeldung über eine Übereinstimmung oder Abweichung der ermittelten Bestückung der Trägerstruktur (10) mit oder von der vorgegeben Bestückung.

## Claims

1. A support structure (10) for use in an air supply arrangement for air conditioning passenger cabins in aircraft, wherein the air supply arrangement comprises at least one centrally controlled cabin ventilation system and an individually adjustable cabin ventilation system, and
wherein the support structure (10) comprises:
- a first section (12) for integrating components of the centrally controlled cabin ventilation system, wherein the first section (12) comprises an air conduit (20) and an outlet (28) for the cabin ventilation system, which are designed such that they are integrated in the support structure (10),
- a second section (14) for receiving and/or integrating components of an emergency oxygen supply for the passengers and
- a third section (16) comprising a plurality of receiving devices (32), wherein each receiving device (32) is designed to receive and releasably secure an active module (50) for individually adjustable cabin ventilation, and wherein the third section (16) has at least a number of receiving devices (32) required for at least one receiving device (32) to be associated with each seating row independent of the passenger cabin seat row configuration, and a supply conduit (30) which is connected by at least one connecting opening (34) to each of the plurality of receiving devices (32) of the third section (16).

2. A support structure (10) according to Claim 1,
wherein each receiving device (32) of the third section (16) is of a cylindrical construction and is delimited by a generated cylinder surface and an end face, and wherein in particular the at least one connecting opening (34) is constructed at the end face of the cylindrical receiving device (32).

3. A support structure (10) according to one of the preceding claims,
wherein the supply conduit (30) comprises an air conduit and at least one power and/or data conduit.

4. A support structure (10) according to one of the preceding claims,
wherein at least one sensor is associated with each receiving device (32), said sensor being designed to establish whether the receiving device (32) is equipped with an active module (50).

5. A supply system (100) for supplying passengers in a passenger space comprising at least one support structure (10) according to one of the preceding claims and at least one active module (50) for individually adjustable cabin ventilation.

6. A supply system (100) according to Claim 5,
which comprises at least one further, passive module (70), wherein the passive module (70) is designed to be received in at least one of the receiving devices (32) of the third section (16) of the support structure (10) in which no active module (50) is received.

7. A supply system (100) according to Claim 6,
wherein the active module (50) comprises at least one connection piece (52) corresponding to the connecting opening (34) of the third section (16) and at least one air nozzle (58) connected to said connection piece, wherein the active module (50) in particular comprises at least one air quantity control device (56a) which is associated with the at least one air nozzle (58), and wherein in particular the air quantity control device (56a) is electrically controllable.

8. A supply system (100) according to one of Claims 6 or 7,
wherein the passive module (70) comprises a connecting section (72) corresponding to the connecting opening (34) and wherein the passive module (70) in particular may comprise operating or comfort elements (82a, 82b) which are connectable by the connecting opening (34) to a data and/or power conduit of the connecting conduit (30).

9. A method for configuring a supply system (100) according to one of Claims 5 to 8 in a passenger cabin of an aircraft, having the steps:
- determining an equipment of the support structure (10) with reference to a predetermined occupancy of the passenger cabin with a number of seating rows arranged at a predetermined spacing, wherein at least one active module (50) is associated with each seating row; and
- inserting active modules (50) according to the determined equipment of the support structure (10).

10. A method according to Claim 9,
comprising the further step:
- inserting passive modules (70) into the receiving devices (32) of the third section (16) of the support structure (10) in which an active module (50) is not received.

11. A method according to Claim 10,
comprising the further step:
- Determining an equipment for each receiving device (32) of the third section (16) with the aid of sensors, wherein these determine whether a receiving device (32) is equipped with an active module (50).

12. A method according to Claim 11,
comprising the further steps:
- comparing the determined equipment of the support structure (10) with a predetermined equipment; and
- transmitting feedback relating to whether the determined equipment of the support structure (10) corresponds to or deviates from the predetermined equipment.

## Revendications

1. Structure de support (10) destinée à être utilisée dans un système d'amenée d'air servant à climatiser une cabine passagers dans un avion, ce système d'amenée d'air comportant au moins un dispositif de ventilation de cabine à réglage centralisé ainsi qu'un dispositif de ventilation de cabine à réglage individuel, et
cette structure de support (10) présentant :
- un premier segment (12) servant à intégrer des éléments du dispositif de ventilation de cabine à réglage centralisé, ce premier segment (12) comportant une conduite d'air (20) et une sortie (28) pour le dispositif de ventilation à réglage centralisé qui sont formées de manière solidaire avec la structure de support (10),
- un deuxième segment (14) servant à recevoir et/ou à intégrer des éléments d'une alimentation de secours destinée à alimenter les passagers en oxygène, et
- un troisième segment (16) comportant une multiplicité de logements (32), chaque logement (32) étant conçu pour recevoir un module actif (50) de ventilation de cabine à réglage individuel et pour permettre la fixation amovible de ce module, ce troisième segment (16) présentant au moins un nombre tel de logements (32) que, indépendamment de la configuration des rangées de sièges à l'intérieur de la cabine passagers, au moins un logement (32) est associé à chaque rangée de sièges, ainsi qu'une conduite d'approvisionnement (30) reliée par au moins une ouverture de jonction (34) à chacun des nombreux logements (32) du troisième segment (16).

2. Structure de support (10) selon la revendication 1,
chaque logement (32) du troisième segment (16) étant conçu de forme cylindrique et délimité par une surface d'enveloppe du cylindre et par une face frontale, et notamment ladite au moins une ouverture de jonction (34) étant ménagée sur la face frontale du logement (32) de forme cylindrique.

3. Structure de support (10) selon l'une des revendications précédentes,
la conduite d'approvisionnement (30) comportant une conduite d'air et au moins un câble électrique et/ou un câble de transmission de données.

4. Structure de support (10) selon l'une des revendications précédentes,
au moins un capteur, conçu pour détecter si le logement (32) est équipé d'un module actif (50), étant associé à chaque logement (32).

5. Système d'approvisionnement (100) destiné aux passagers dans une cabine passagers et comportant au moins une structure de support (10) selon l'une des revendications précédentes ainsi qu'un module actif (50) de ventilation de cabine à réglage individuel.

6. Système d'approvisionnement (100) selon la revendication 5,
qui présente au moins un module supplémentaire passif (70), ce module passif (70) étant conçu de manière à pouvoir être logé dans au moins un des logements (32) du troisième segment (16) de la structure de support (10) non équipés d'un module actif (50).

7. Système d'approvisionnement (100) selon la revendication 6,
le module actif (50) présentant au moins un embout de raccordement (52) en correspondance avec l'ouverture de jonction (34) du troisième segment (16) ainsi qu'une buse d'air (58) reliée audit embout, le module actif (50) présentant plus particulièrement au moins une régulation de débit d'air (56a) associée à ladite au moins une buse d'air (58), et plus particulièrement la régulation de débit d'air (56a) pouvant être commandée électriquement.

8. Système d'approvisionnement (100) selon l'une des revendications 6 ou 7,
le module passif (70) présentant un segment de jonction (72) en correspondance avec l'ouverture de jonction (34), et le module passif (70) pouvant notamment présenter des éléments de commande et de confort (82a, 82b) reliables par le biais de l'ouverture de jonction (34) à un câble de transmission de données et/ou à un câble électrique de la conduite d'approvisionnement (30).

9. Procédé permettant de configurer un système d'approvisionnement (100) selon les revendications 5 à 8 à l'intérieur d'une cabine passagers, comportant les étapes suivantes:
- la détection d'un équipement de la structure de support (10) à partir de l'agencement prédéfini d'un nombre de rangées de sièges disposées espacées les unes des autres selon un espace prédéfini à l'intérieur de la cabine passagers, au moins un module actif (50) étant associé à chaque rangée de sièges ; et
- la mise en place de modules actifs (50) conformément à l'équipement de la structure de support (10) détecté.

10. Procédé selon la revendication 9,
comportant l'étape suivante :
- la mise en place de modules passifs (70) dans les logements (32) du troisième segment (16) de la structure de support (10) non équipés d'un module actif (50).

11. Procédé selon la revendication 10,
comportant l'étape supplémentaire suivante :
- la détection par capteurs d'un équipement pour chaque logement (32) du troisième segment (16), ces capteurs détectant si un logement (32) est équipé d'un module actif (50).

12. Procédé selon la revendication 11,
comportant les étapes supplémentaires suivantes :
- la comparaison de l'équipement de la structure de support (10) détecté avec l'équipement prédéfini ; et
- l'édition d'un retour d'information sur la conformité ou sur la non-conformité de l'équipement de la structure de support (10) détecté avec l'équipement prédéfini.
